# EUROPÄISCHE PATENTSCHRIFT

(11) **EP 1 403 142 B1**
(45) Veröffentlichungstag und Bekanntmachung des Hinweises auf die Patenterteilung: **02.08.2006**
(21) Anmeldenummer: 03017714.1
(22) Anmeldetag: 02.08.2003
(51) Int. Cl.: B60R 9/042

(54) **Dachträger für Fahrzeuge**
Vehicle roof rack
Galerie de toit pour véhicule

(30) Priorität: 12.09.2002 DE 10242281; 04.04.2003 DE 10315329
(43) Veröffentlichungstag der Anmeldung: 31.03.2004
(73) Patentinhaber: Dr.Ing. h.c.F. Porsche Aktiengesellschaft, 70435 Stuttgart (DE); Mont Blanc Industri AB, 516 90 Dalsjöfors (SE)
(72) Erfinder: Stadler, Bernd, 71735 Eberdingen (DE); Svenningsson, Dan, 52332 Ulricehamn (SE)

(56) Entgegenhaltungen:
- EP-A- 0 101 054
- EP-A- 0 511 179
- WO-A-87/07568
- DE-A- 3 626 896
- DE-A- 19 723 360
- FR-A- 2 596 344
- US-A- 6 158 638
- US-B1- 6 428 263
- PATENT ABSTRACTS OF JAPAN vol. 1996, no. 02, 29. Februar 1996 (1996-02-29) & JP 07 266999 A (OI SEISAKUSHO CO LTD), 17. Oktober 1995 (1995-10-17)

## Beschreibung

Die Erfindung bezieht sich auf einen Dachträger für Fahrzeuge nach dem Oberbegriff des Anspruchs 1.

Aus der DE 195 43 218 A1 ist ein Dachgepäckträger für Fahrzeuge mit einem Grundträger bekannt, der unbeweglich am Fahrzeug festsetzbar ist. Mit dem Grundträger ist ein Lastträger verbunden, der auf dem Grundträger in eine schräge Beladestellung und in eine angehobene Transportstellung auf dem Fahrzeugdach verschiebbar ist.

Aus der FR 2596344 A1 ist ein gattungsgemäßer Dachträger mit einem Lastträger mit jeweils zwei quer verlaufenden und feststehenden Profilträgern bekannt, in denen an jeder Fahrzeugseite ein aus einem Traggestell bestehendes Beladeelement über Stellhebel in eine ausgefahrene schräge Beladestellung und in eine eingefahrene Transportstellung auf dem Fahrzeugdach verschiebbar geführt ist. Das Beladeelement besteht aus an jeder Fahrzeugseite verschwenkbaren Profilträgern, die endseitig über eine Trägerstange verbunden sind und die der Trägerstange abgekehrten freien Enden der Profilträger sind jeweils mit einem Stellhebel verbunden.

Der Stellhebel ist mit seinem einen Ende über einen Bolzen schwenkbar im verschwenkbaren Profilträger gehalten und mit seinem anderen abgekehrten Ende ist der Stellhebel über ein Gleitelement im feststehenden Profilträger des Lastträgers verschiebbar angeordnet.
Der Stellhebel ist mit seinem einen Ende über einen Bolzen schwenkbar im verschwenkbaren Profilträger gehalten und mit seinem anderen abgekehrten Ende ist der Stellhebel über ein Gleitelement im feststehenden Profilträger des Lastträgers verschiebbar angeordnet.

Die Aufgabe der Erfindung besteht darin, einen verbesserten Dachträger für ein Kraftfahrzeug zu schaffen, der eine einfach zu handhabende Beladehilfe umfasst, die in einer Beladestellung sicher abgestützt und in einer Transportstellung gesichert auf dem Dachträger gehalten ist.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, dass über das aus einem Traggestell bestehende und seitlich des Fahrzeugs abklappbare Beladeelement, beispielsweise Fahrräder in geringer Höhe von der Fahrzeugseite her aufgesetzt werden können und diese dann über das Beladeelement auf das Fahrzeugdach gehoben werden.

Nach der Erfindung wird erreicht, dass das von dem Lastträger losgelöste und nur über das mit dem Stellhebel verbundene Beladeelement eine sichere Beladestellung einstellbar ist, derart, dass das Beladeelement eine nach unten gerichtete Schrägstellung einnimmt. Damit eine sichere Abstützung des Beladeelements am Lastträger bzw. an den feststehenden Profilträgern gewährleistet wird, sind die beiden Stellhebel in der schrägen Beladestellung jeweils an einem ortsfesten, als Abstützfläche ausgeführten Anschlag des feststehenden Profilträgers gehalten. Die erste Abstützfläche des Stellhebels ist in der schrägen Beladestellung in einer vertikalen Ebene angeordnet und steht einer korrespondierenden Fläche des Anschlags gegenüber. Eine zweite Abstützfläche des Stellhebels ist zum verschwenkbaren Profilträger unter einem Winkel zur ersten Abstützfläche des Stellhebels angeordnet.

Damit in der Transportstellung auf dem Fahrzeugdach die Profilträger des Beladeelements beider Fahrzeugseiten einfach zueinander positionierbar sind, sind die verschwenkbaren Profilträger des Beladeelements in der Transportstellung auf dem Fahrzeugdach über ein ortsfestes Steckelement mit dem unmittelbar gegenüberstehenden Profilträger des weiteren Beladeelements verbunden. Insbesondere besteht das Steckelement aus einem keilförmigen Einsatzteil, in das die verschwenkbaren Profilträger einschiebbar sind. Das Steckelement ist vorzugsweise fest mit dem Profilträger verbunden und auf beiden Seiten keilförmig zentriert. Die beiden Beladeelemente (Profilträger) werden zueinander in Z-Richtung fixiert.

Eine Verrastung der beweglichen Profilträger des Beladeelements an den feststehenden Profilträgern des Lastträgers kann nach einer Ausführung über federnde Arretierzungen, die in einer ortsfesten Abschlusskappe angeordnet sind, erfolgen.

Zur Festsetzung der oben liegenden Profilträger auf den darunter angeordneten ortsfesten Profilträgern in der Transportstellung ist an den oben liegenden Profilträgern jeweils ein Arretierstift vorgesehen, der in der Transportstellung in eine korrespondierende Öffnung des feststehenden Profilträgers hineinragt. Vorzugsweise ist der Arretierstift an einem Federelement endseitig gehalten und mit dem Federelement ist ein Stellelement verbunden, das außerhalb des Profilträgers angeordnet und über eine abgestellte Zunge des Federelements mit dem Stellelement verbunden ist. Das Federelement weist an seinem hinteren dem Arretierstift abgekehrten Ende eine Abstellung auf, die mit dem Profilträger verbunden ist.

Ein Ausführungsbeispiel der Erfindung ist in den Zeichnungen dargestellt und wird im folgenden näher beschrieben.
Es zeigen
- Fig. 1: eine schaubildliche Darstellung eines Lastträgers beispielsweise für Fahrräder mit einem einseitig ausgeklappten Beladelement,

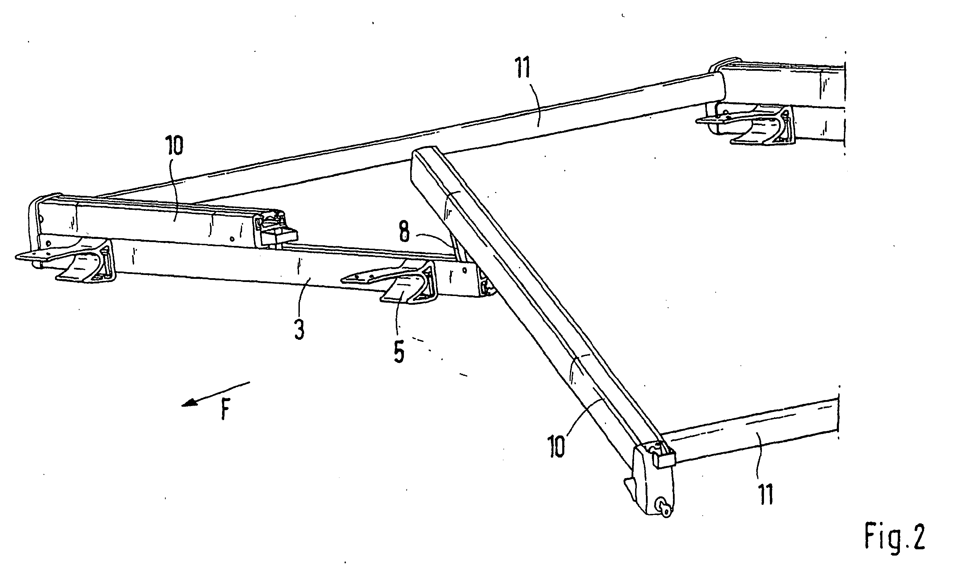

- Fig. 2: eine schaubildliche Darstellung eines Teils des Beladeelements mit ausgeklappten Profilträgern des Beladeelements,

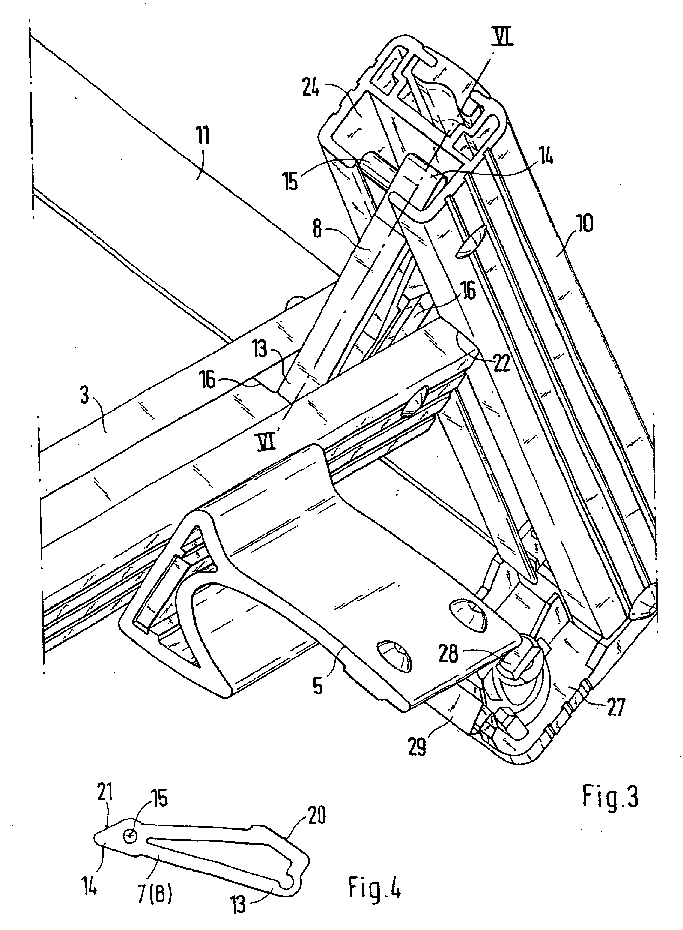

- Fig. 3: eine vergrößerte Darstellung eines ausgeklappten Profilträgers des Beladeelements mit Stellhebel und Anschlag,
- Fig. 4: eine Ansicht auf den Stellhebel,

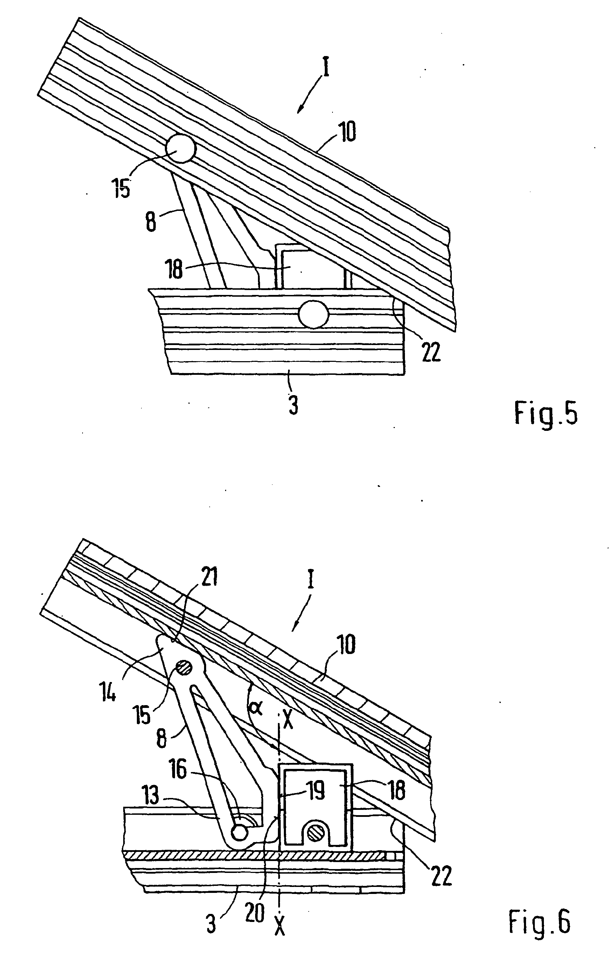

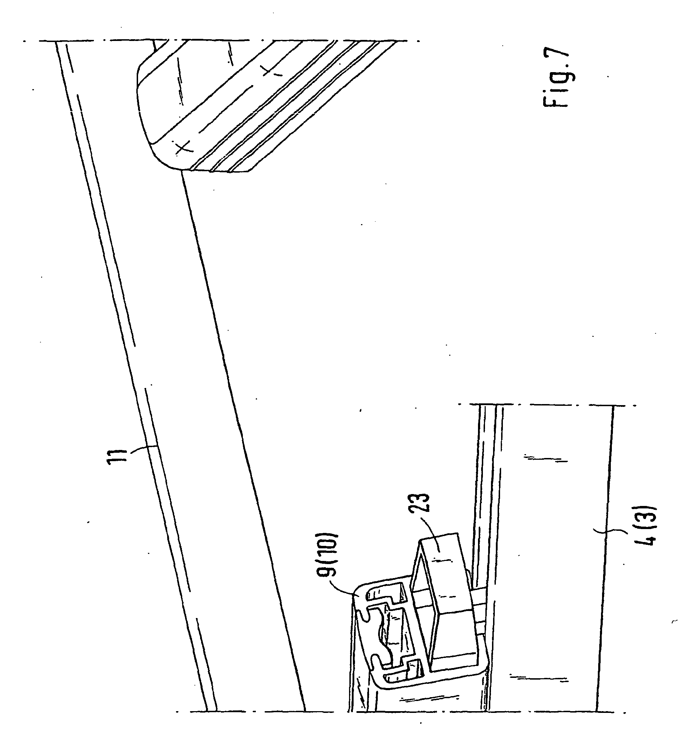

- Fig. 5: eine Seitenansicht auf den im Profilträger angelenkten Stellhebel mit Anschlag,

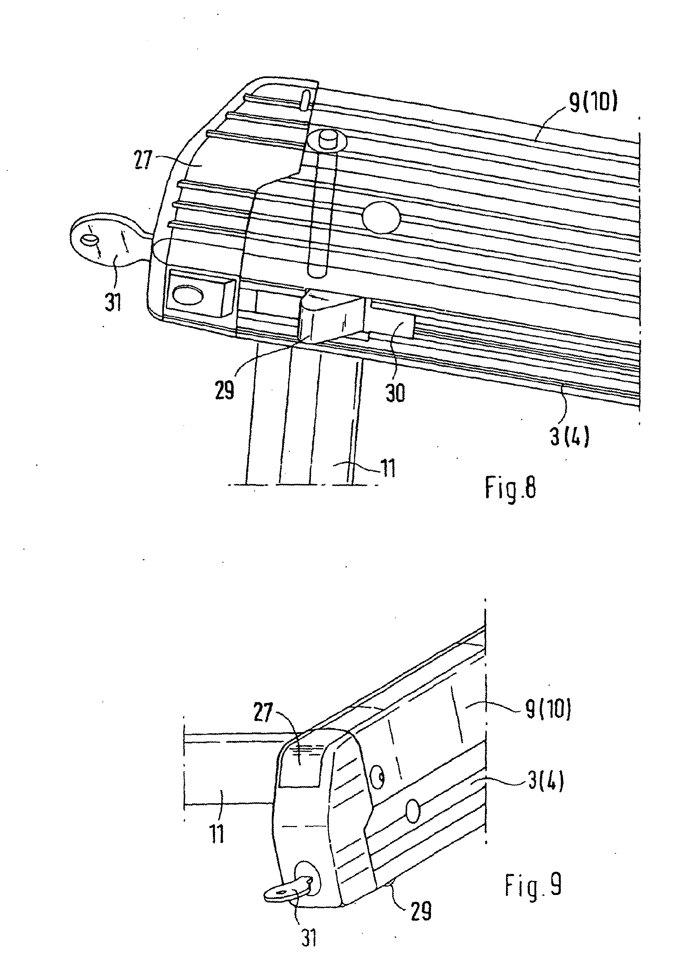

- Fig. 6: einen Schnitt nach der Linie VI-VI der Fig. 3 durch den Stellhebel,
- Fig. 7: eine schaubildliche Darstellung auf ein Steckelement in einem Profilträger des Beladelements,
- Fig. 8: eine Unteransicht auf eine federnde Arretierzunge in einer Aussparung eines feststehenden Profilträgers,
- Fig. 9: eine Ansicht auf eine Abschlusskappe mit Schloss und Schlüssel,

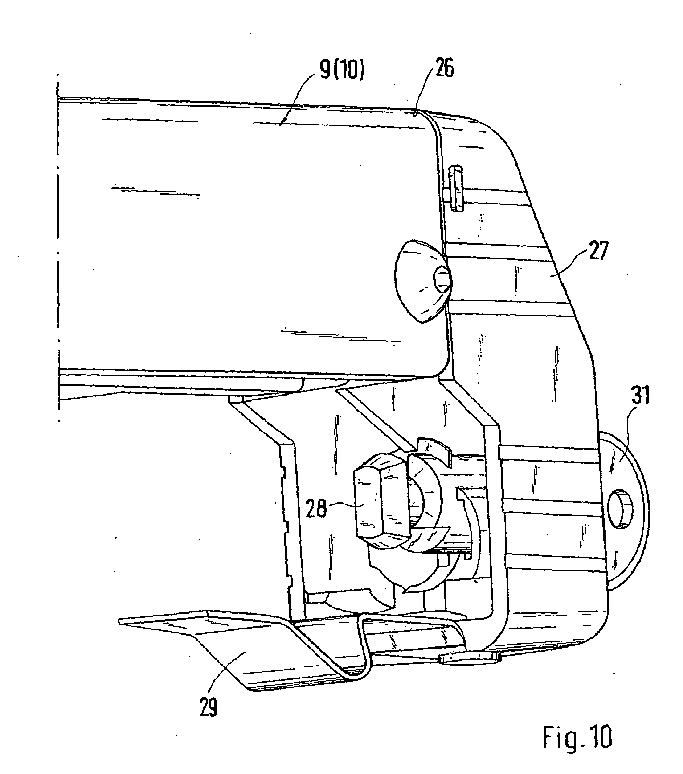

- Fig. 10: eine Innenansicht auf die Abschlusskappe mit federnder Arretierzunge,

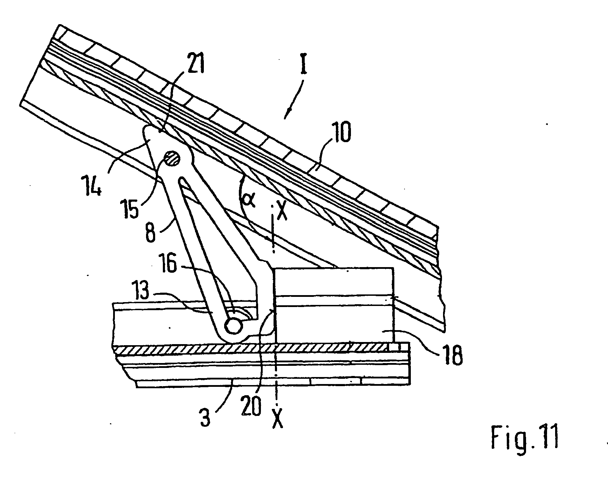

- Fig. 11: eine Seitenansicht auf einen ortsfesten Profilträger mit endseitig angeordnetem Anschlag mit Führungsnuten,

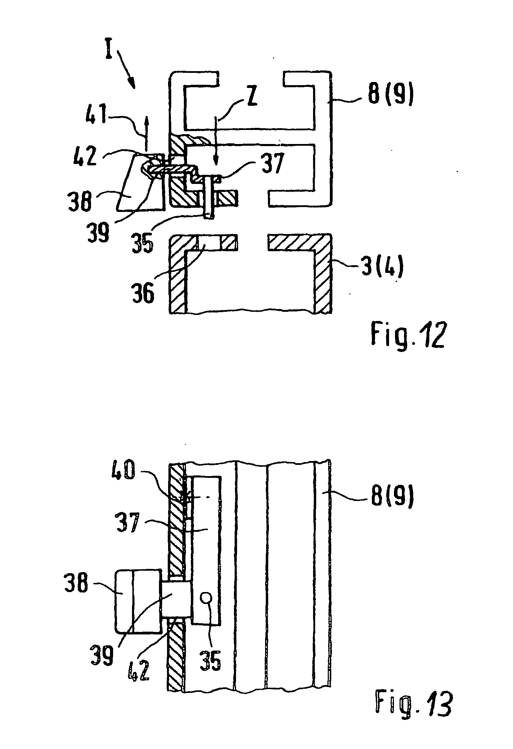

- Fig. 12: einen teilweisen Querschnitt durch einen Profilträger und einem ortsfesten Profilträger mit Arretierstift und
- Fig. 13: eine Draufsicht auf ein Federelement mit Arretierstift und außenseitigem Stellelement in Pfeilrichtung Z der Fig. 12 gesehen.

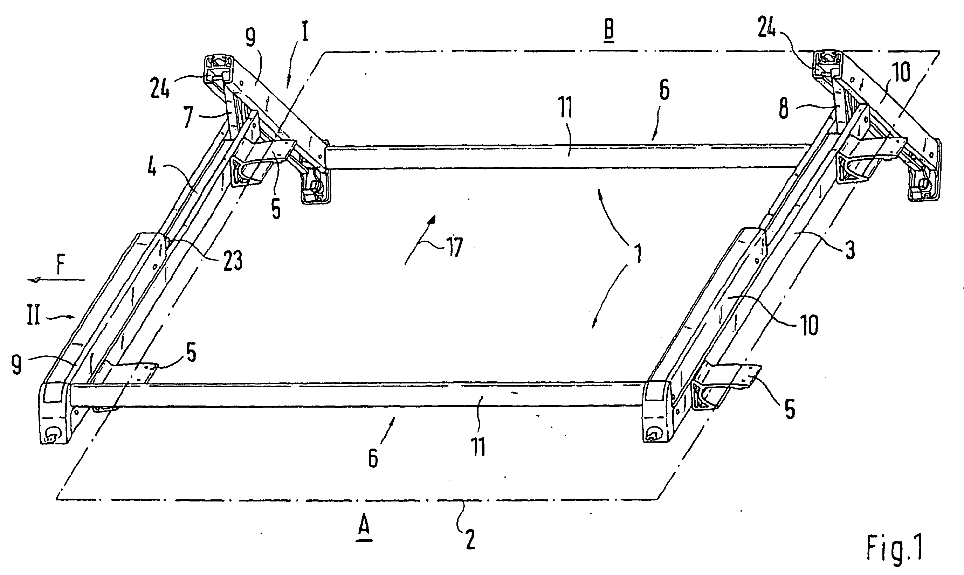

Wie in Fig. 1 näher zu erkennen ist, umfasst ein Lastträger 1 jeweils zwei querverlaufende und an einem Dachträger 2 befestigte Profilträger 3 und 4, wozu Festlegungselemente 5 wie beispielsweise Adapter vorgesehen sind, die beispielsweise einen Rohrträger oder dgl. übergreifen. Der Dachträger 2 selbst ist mit dem Fahrzeug verbunden, was nicht näher dargestellt ist.

Auf den feststehenden Profilträgern 3, 4 jeder Fahrzeugseite ist an jeder Seite A und B des Fahrzeugs ein Beladeelement 6 jeweils über Stellhebel 7, 8 verstellbar gehalten. Dieses Beladeelement 6 besteht aus verschwenkbaren Profilträgern 9, 10, die mittels einer Trägerstange 11 miteinander verbunden sind.

Das Beladeelement 6 jeder Fahrzeugseite A und B ist über die Stellhebel 7, 8 in eine seitliche schräg abgeklappte Beladestellung I und in eine auf den feststehenden Profilträgern 3, 4 abgelegte Transportstellung II verlagerbar, wie es in Fig. 1 näher dargestellt ist.

Die Stellhebel 7, 8 sind mit ihrem einen Ende 14 über einem Bolzen 15 mit den verschwenkbaren Profilträgern 9, 10 verbunden und mit ihren abgekehrten Enden 13 jeweils über eine Rolle 16 im feststehenden Profilträger 3, 4 verschiebbar.

Das Beladeelement 6 wird aus der Transportstellung II auf dem Fahrzeugdach mittels der Führung über die Rolle 16 in Pfeilrichtung 17 in die schräge Beladestellung I gegen einen ortsfesten Anschlag 18 im feststehenden Profilträger 3, 4 gezogen, der auch zur Führung und Abstützung der veschwenkbaren Profilträger 9, 10 in der Transportstellung dient. Dieser Anschlag 18 weist eine in einer vertikalen Ebene X-X angeordnete Abstützfläche 19 auf, die einer korrespondierenden Abstützfläche 20 des Stellhebels 7, 8 gegenübersteht. Des weiteren weist der Stellhebel 7, 8 eine über einen Winkel α zur Abstützfläche 19, 20 angestellte zweite Abstützfläche 21 auf, die sich innenseitig der verschwenkbaren Profilträger 9, 10 anlegt. In dieser schrägen abgeklappten Beladestellung I erfolgt eine Abstützung der Profilträger 9, 10 somit über die Abstützflächen 19, 20 und 21 sowie an einer Abstützung 22 am freien Ende der feststehenden Profilträger 3, 4.

Am verschwenkbaren Profilträger 9 oder 10 ist ein Steckelement 23 vorgesehen, das beidseitig keilförmig - in Draufsicht und in Seitenansicht gesehen - ausgebildet ist auf das die gegenüberstehenden Profilträger 9/9 bzw. 10/10 einsteckbar sind, damit die beiden miteinander verbundenen Profilträger eine genaue Anordnung zueinander aufweisen und miteinander verbunden sind.

Am freien, dem Steckelement 23 abgekehrten Ende 26 des verschwenkbaren Profilträgers 9, 10 ist jeweils eine Abschlusskappe 27 befestigt, die ein Schließelement 28 umfasst und das nach einer Ausführung mit einer federnden Arretierzunge 29 versehen ist. Diese rastet bei der Transportstellung II in eine bodenseitige Ausnehmung 30 des feststehenden Profilträgers 3, 4 ein und fixiert diesen. Über einen Schlüssel 31 wird das Schließteil 28 in eine Rastaufnahme gedreht und festgesetzt.

Zur Arretierung der verschwenkbaren Profilträger 9, 10 an den darunterliegenden feststehenden Profilträgern 3, 4 in der Transportstellung 1 ist in jedem Profilträger 9, 10 ein manuell verstellbarer Arretierstift 35 vorgesehen, der in der Arretierstellung mit seinem Schaft in eine korrespondierende Öffnung 36 des darunter angeordneten feststehenden Profilträgers 3, 4 eingreift. In dieser Position nehmen die Profilträger 9, 10 die Transportstellung II ein.

Wenn die Beladestellung I eingeleitet wird, muss der Arretierstift 35 an jedem verschwenkbaren Profilträger 9, 10 gelöst, das heißt aus der Öffnung 36 in Pfeilrichtung 41 über das außenliegende Stellelement 38 hochgezogen werden, bei der der Arretierstift 35 mit seinem Ende bündig zur Unterfläche des Profilträgers 9, 10 steht. Erst dann können die Profilträger 9, 10 über die verbindende Trägerstange 11 herausgezogen werden.

Der Arretierstift 35 ist mit einem Federelement 37, beispielsweise einer länglichen Blattfeder verbunden, die innenseitig des Profilträgers 9, 10 über eine endseitige Abstellung 40 am Profilträger 9, 10 befestigbar ist.

Das Stellelement 38 ist mit dem Federelement 37 im Bereich des Arretierstiftes 35 über eine mittels eines Schlitzes 42 durch den Profilträger 9, 10 durchgeführte abgestellte Zunge 39 verbunden. Hierdurch ist eine Bewegung des Stellelements 38 in Pfeilrichtung 41 unter Federspannung möglich. Nach einem Loslassen des Stellelements 38 schnellt dieses in seine Arretierstellung zurück, das heißt, mit herausragendem Schaft des Arretierstiftes 35.

## Patentansprüche

1. Dachträger für ein Fahrzeug mit einem Grundträger, der auf einem Fahrzeugdach festlegbar und mit einem Lastträger (1) verbindbar ist, welcher ein Beladeelement(6) umfasst, das in einer Beladestellung (I) vom Lastträger an mindestens einer Fahrzeugseite schräg nach unten absteht und der Lastträger (1) aus jeweils zwei querverlaufenden, feststehenden Profilträgern (3, 4) besteht, in denen an jeder Fahrzeugseite (A, B) das aus einem Traggestell bestehende Beladeelement (6) über zwei Stellhebel (7, 8) in die ausgefahrene schräge Beladestellung und in eine eingefahrene Transportstellung auf dem Fahrzeugdach verschiebbar geführt ist und das Beladeelement (6) an jeder Fahrzeugseite (A, B) aus zwei verschwenkbaren Profilträgern (9, 10) mit einer endseitig verbindenden Trägerstange (11) besteht und die der Trägerstange (11) abgekehrten freien Enden der Profilträger (9, 10) jeweils mit dem Stellhebel (7) bzw. (8) verbunden sind und jeder Stellhebel (7, 8) mit seinem einen Ende (14) über einen Bolzen (15) verschwenkbar am verschwenkbaren Profilträger (9, 10) gehalten und mit seinem anderen, dem Bolzen (15) abgekehrten Ende (13) über eine Rolle (16) im feststehenden Profilträger (3, 4) des Lastträgers (1) verschiebbar angeordnet ist, wobei jeder Stellhebel (7, 8) in der ausgefahrenen schrägen Beladestellung (I) mit einer ersten Abstützfläche (20) an einem ortsfesten Anschlag (18) des feststehenden Profilträgers (3, 4) und mit einer zweiten Abstützfläche gehalten ist, **dadurch gekennzeichnet, dass** die erste Abstützfläche (20) am Stellhebel (7, 8) in der ausgefahrenen schrägen Beladestellung (I) in einer vertikalen Ebene (X-X) angeordnet ist und einer korrespondierenden Fläche (19) des ortsfesten Anschlags (18) gegenübersteht und die zweite Abstützfläche (21) am Stellhebel (7, 8) zum verschwenkbaren Profilträger (9, 10) unter einem Winkel (α) zur ersten Abstützfläche (20) des Stellhebels (7, 8) angeordnet ist.

2. Dachträger nach Anspruch 1, **dadurch gekennzeichnet, dass** die verschwenkbaren Profilträger (9, 10) jeweils an einer Abstützung (22) an den freien Enden der feststehenden Profilträger (3, 4) gehalten sind und über den Stellhebel (7, 8) am ortsfesten Anschlag (18) und über die zweite Abstützfläche (21) an einer Innenfläche des verschwenkbaren Profilträgers (9, 10) in der ausgefahrenen Beladestellung (I) abstützbar sind.

3. Dachträger nach den Ansprüchen 1 oder 2, **dadurch gekennzeichnet, dass** an den der Trägerstange (11) zugekehrten Enden der verschwenkbaren Profilträger (9, 10) jeweils ein verstellbarer Arretierstift (35) gehalten ist, der in der Transportstellung (II) in eine korrespondierende Öffnung (36) des feststehenden Profilträgers (3, 4) hineinragt und in einer Beladestellung (I) freiliegend zur Öffnung (36) angeordnet ist.

4. Dachträger nach Anspruch 3, **dadurch gekennzeichnet, dass** der Arretierstift (35) an einem Federelement (37) endseitig gehalten und mit diesem ein Stellelement (38) verbunden ist, das außerhalb des Profilträgers (9, 10) angeordnet und über eine abgestellte Zunge (39) des Federelements (37) mit dem Stellelement (38) verbindbar ist.

5. Dachträger nach dem Anspruch 4, **dadurch gekennzeichnet, dass** das Federelement (37) an seinem hinteren dem Arretierstift (37) abgekehrten Ende über eine Abstellung (40) mit dem Profilträger (9, 10) verbindbar ist.

6. Dachträger nach einem der vorhergehenden Ansprüche, **dadurch gekennzeichnet, dass** auf den Profilträgern (9 oder 10) ein ortsfestes Steckelement (23) angeordnet ist, das in der Transportstellung (II)auf die gegenüberstehenden Profilträger (9/9 bzw. 10/10) aufsteckbar ist.

7. Dachträger nach Anspruch 6, **dadurch gekennzeichnet, dass** das Steckelement (23) aus einem keilförmigen Einsatzteil besteht, das in eine stirnseitige Öffnung (24) des korrespondierenden, gegenüberstehenden Profilträgers (9/9 bzw. 10/10) einschiebbar ist.

8. Dachträger nach einem der vorhergehenden Ansprüche, **dadurch gekennzeichnet, dass** am freien Ende des verschwenkbaren Profilträgers (9, 10) jeweils eine ortsfeste Abschlusskappe (27) mit einem Schließelement (28) und einer federnden Arretierzunge (29) angeordnet ist und die Arretierzunge (29) in der Transportstellung (II) des Beladeelements (6) jeweils in eine Ausnehmung (30) des feststehenden Profilträgers (3, 4) rastend eingreift.

## Claims

1. A roof rack for a vehicle with a main support, which is capable of being fixed to a vehicle roof and is capable of being connected to a load support (1) which comprises a loading element (6) which in a loading position (**I**) projects obliquely downwards from the load support on at least one side of the vehicle, and the load support (1) comprises two respective fixed profiled supports (3, 4) in each case which extend transversely and in which the loading element (6) comprising a support frame is guided on each side (**A, B**) of the vehicle so as to be displaceable by way of two control levers (7, 8) into the extended oblique loading position and into a retracted conveying position on the vehicle roof, and the loading element (6) on each side (**A, B**) of the vehicle comprises two pivotable profiled supports (9, 10) with a support rod (11) joining them at one end, and the free ends of the profiled supports (9, 10) facing away from the support rod (11) are connected in each case to the control lever (7) and (8) respectively, and each control lever (7, 8) is held with one end (14) thereof on the pivotable profiled support (9, 10) so as to be pivotable about a pin (15) and is arranged with its other end (13) facing away from the pin (15) so as to be displaceable in the fixed profiled support (3, 4) of the load support (1) by way of a roller (16), wherein each control lever (7, 8) is held in the extended oblique loading position (I) with a first support face (20) on a stationary stop (18) of the fixed profiled support (3, 4) and with a second support face, **characterized in that** the first support face (20) is arranged on the control lever (7, 8) in the extended oblique loading position (I) in a vertical plane (**X-X**) and is opposite a corresponding face (19) of the stationary stop (18), and the second support face (21) is arranged on the control lever (7, 8) for the pivotable profiled support (9, 10) at an angle (α) with respect to the first support face (20) of the control lever (7, 8).

2. A roof rack according to Claim 1, **characterized in that** the pivotable profiled supports (9, 10) are held in each case on a support (22) at the free ends of the fixed profiled supports (3, 4) and are capable of being supported on the stationary stop (18) by way of the control lever (7, 8) and on an inner face of the pivotable profiled support (9, 10) by way of the second support face (21) in the extended oblique loading position (**I**).

3. A roof rack according to Claims 1 or 2, **characterized in that** a respective displaceable locking pin (35), which in the conveying position (**II**) projects into a corresponding opening (36) in the fixed profiled support (3, 4) and in a loading position (I) is arranged free with respect to the opening (36), is held on the ends of the pivotable profiled support (9, 10) facing the support rod (11) in each case.

4. A roof rack according to Claim 3, **characterized in that** the locking pin (35) is held at one end on a spring element (37), and a control element (38), which is arranged outside the profiled support (9, 10), is connected to the said spring element (37), and the locking pin (35) is capable of being connected to the control element (38) by way of a projecting tongue (39) of the spring element (37).

5. A roof rack according to Claim 4, **characterized in that** the spring element (37) is capable of being connected at its rear end facing away from the locking pin (37) [*sic - recte* 35] to the profiled support (9, 10) by way of a projecting portion (40).

6. A roof rack according to any one of the preceding Claims, **characterized in that** a stationary insertion element (23) is arranged on the profiled supports (9 or 10), which is capable of being placed on the opposite profiled supports (9/9 and 10/10 respectively) in the conveying position (**II**).

7. A roof rack according to Claim 6, **characterized in that** the insertion element (23) comprises a wedge-shaped insert part which is capable of being inserted into an opening (24) on the end face of the corresponding opposite profiled support (9/9 and 10/10 respectively).

8. A roof rack according to any one of the preceding Claims, **characterized in that** a respective stationary terminal cap (27) with a closure element (28) and a springing locking tongue (29) is arranged in each case at the free end of the pivotable profiled support (9, 10), and in the conveying position (II) of the loading element (6) the locking tongue (29) engages in a catching manner in a recess (30) in the fixed profiled support (3, 4) in each case.

## Revendications

1. Porte-bagages de toit pour un véhicule comportant une poutre de base qui peut être fixée sur le toit d'un véhicule et reliée à un porte-charge (1), lequel comprend un élément de chargement (6) qui, dans une position de chargement (I), dépasse obliquement vers le bas du porte-charge sur au moins un côté du véhicule et le porte-charge (1) est constitué de deux poutres profilées (3, 4) fixes s'étendant transversalement dans lesquelles, sur chaque côté (A, B) du véhicule, l'élément de chargement (6), constitué d'une structure portante, est guidé coulissant sur le toit du véhicule, par deux leviers de réglage (7, 8), dans la position de chargement oblique sortie et dans une position de transport rentrée, et l'élément de chargement (6) est constitué, sur chaque côté (A, B) du véhicule, de deux poutres profilées (9, 10) pivotantes avec une barre de porte-bagages (11) les reliant côté extrémité, et les extrémités libres, tournées à l'opposé de la barre de porte-bagages (11), des poutres profilées (9, 10), sont reliées aux leviers de réglage (respectivement 7 et 8) et chaque levier de réglage (7, 8) est maintenu par l'une de ses extrémités (14), par un boulon (15), de manière à pouvoir pivoter sur la poutre profilée (9, 10) pivotante, et, par son autre extrémité (13), opposée au boulon (15), est disposé de manière à pouvoir coulisser, par un rouleau (16) dans la poutre profilée (3, 4) fixe du porte-charge (1), chaque levier de réglage (7, 8) en position de chargement oblique (I) sortie étant maintenu par une première surface d'appui (20) sur une butée (18) fixe de la poutre profilée fixe (3, 4), et par une deuxième surface d'appui, **caractérisé en ce que** la première surface d'appui (20) sur le levier de réglage (7, 8) est disposée, dans la position de chargement oblique (I) sortie, dans un plan vertical (X-X) et fait face à une surface (19) correspondante de la butée fixe (18), et la deuxième surface d'appui (21) sur le levier de réglage (7, 8) est disposée, par rapport à la poutre profilée (9, 10) pivotante, suivant un angle α par rapport à la première surface d'appui (20) du levier de réglage (7, 8).

2. Porte-bagages de toit selon la revendication 1, **caractérisé en ce que** les poutres profilées (9, 10) pivotantes sont maintenues chacune sur un appui (22) aux extrémités libres des poutres profilées (3, 4) fixes et peuvent être soutenues dans la position de chargement (I) sortie, par le levier de réglage (7, 8), sur la butée fixe (18), et par la deuxième surface d'appui (21), sur une surface intérieure de la poutre profilée (9, 10) pivotante.

3. Porte-bagages de toit selon les revendications 1 ou 2, **caractérisé en ce qu'**aux extrémités, tournées vers la barre de porte-bagages (11), des poutres profilées (9, 10) pivotantes est fixé un doigt d'arrêt (35) réglable qui, dans la position de transport (II), s'engage à l'intérieur d'une ouverture (36) correspondante de la poutre profilée (3, 4) fixe et, dans une position de chargement (I), est disposé de manière libre par rapport à l'ouverture (36).

4. Porte-bagages de toit selon la revendication 3, **caractérisé en ce que** le doigt d'arrêt (35) est maintenu côté extrémité sur un élément de ressort (37) et à celui-ci est relié un élément de réglage (38) qui est disposé à l'extérieur de la poutre profilée (9, 10) et peut être relié à l'élément de réglage (38), par une languette (39) dépassante de l'élément de ressort (37).

5. Porte-bagages de toit selon la revendication 4, **caractérisé en ce qu'**à son extrémité arrière tournée à l'opposé du doigt d'arrêt (35), l'élément de ressort (37) peut être relié à la poutre profilée (9, 10) par une patte (40).

6. Porte-bagages de toit selon l'une des revendications précédentes, **caractérisé en ce que** sur les poutres profilées (9 ou 10) est disposé un élément d'enfichage (23) fixe qui peut être emboîté en position de transport (II), sur les poutres profilées (9/9 respectivement 10/10) opposées.

7. Porte-bagages de toit selon la revendication 6, **caractérisé en ce que** l'élément d'enfichage (23) est constitué d'un insert en forme de coin qui peut être introduit dans une ouverture (24) frontale de la poutre profilée (9/9 respectivement 10/ 10) opposée correspondante.

8. Porte-bagages de toit selon l'une des revendications précédentes, **caractérisé en ce qu'**à l'extrémité libre de la poutre profilée (9, 10) pivotante est disposé un capuchon de fermeture (27) fixe respectif avec un élément de fermeture (28) et une languette d'arrêt (29) élastique, et la languette d'arrêt (29) s'engage avec encliquetage, dans la position de transport (II) de l'élément de chargement (6), dans un évidement (30) respectif de la poutre profilée (3, 4) fixe.
